# EUROPEAN PATENT APPLICATION

(11) **EP 1 087 227 A1**
(43) Date of publication of application: **28.03.2001**
(21) Application number: 00308179.1
(22) Date of filing: 20.09.2000
(51) Int. Cl.: G01N 27/447, B01D 57/02

(54) **a free flow electrophoresis apparatus**

(30) Priority: 24.09.1999 JP 27022999
(71) Applicant: Technology Research Association of Medical And Welfare Apparatus, Tokyo 105 (JP)
(72) Inventor: Shinohara, Etsuo, Hachioji City, Tokyo (JP); Kondo, Seiji, Hachioji City, Tokyo (JP); Tajima, Nobuyoshi, Akiruno City, Tokyo (JP)
(74) Representative: Silverman, Warren

(57) **Abstract**

A free flow electrophoresis apparatus includes a separation bed (4) for separation of components of a liquid sample, a pair of electrodes (3) in the outer side of the separation bed for applying a voltage to the liquid sample orthogonal to the stream of the buffer solution incorporating the liquid sample and a division flow path (5) with collection channels (5(1)...,5(n+m)) for the extraction of the components of the liquid sample. The collection channels having the same cross sectional area and the same length.

## Description

This invention relates to an electrophoresis apparatus, particularly to a free flow electrophoresis apparatus which can analyze a liquid sample, or separate and extract the components of the liquid sample by the electrophoresis.

Electrophoresis is employed in the analysis of various components of a liquid sample or the separation and extraction of the components of the liquid sample, and attention is paid to capillary electrophoresis because it has a high resolution. A capillary electrophoresis apparatus includes a capillary, a high voltage electric power supply and a detector, etc. The capillary, which is essential in the capillary electrophoresis apparatus, is composed of an elongated cylindrical quartz tube. The quartz tube is reinforced by coating a polyimide resin thereon. In the capillary electrophoresis, since the analysis is performed in the capillary with a diameter of not more than 150 µm, it is influenced by the surfaces of the capillary (boundary faces). That is, the capillary electrophoresis takes advantage of electroosmosis flow at the boundary faces.

With recent development of micromachine technique, the formation of ditches in a silicon substrate or a glass substrate by photolithography technique, and the carrying out of the electrophoresis in the ditches, instead of the capillary has been tried. The ditches serve as the above capillary, and may have various shapes, so that the electrophoresis can be applied widely.

On the other hand, the micromachine technique has been applied for a pretreating system of a sample using elecctrophoresis. A pretreating system using free flow electrophoresis is described in "Continuous Sample Pretreatment Using a Free-Flow Electrophoresis Device Integrated onto a Silicon Chip" Anal. Chem. (Analytical Chemistry) Vol. 66, p2858-2865 (1994) and USP 5,180,480.

In the pretreating system, a flow path to flow a buffer solution for electrophoresis continuously and a pair of electrodes to apply a voltage to a liquid sample incorporated in the buffer solution orthogonal to the stream of the buffer solution are formed. When a liquid sample is dropped into the flowing buffer solution, it is carried by the buffer solution, and is separated into its components by the orthogonal voltage.

Minute collection channels are provided in the down stream of the system, and given components are extracted through some of the collection channels. In this way, the pretreating system can pretreat the liquid sample continuously. That is, even such a minute system using the micromachine technique can treat a given amount sample without changing the system size.

From the free flow electrophoresis in which a voltage is applied to the down stream of the buffer solution incorporating the liquid sample orthogonally in the above system, this inventors obtain the following idea.
(i) It is important to maintain the stream of the buffer solution incorporating the liquid sample uniform in a separation bed for precise separation of the liquid sample by the free flow electrophoresis. If the distance between the upper surface and the lower surface of the separation bed is smaller, the upper and lower surfaces influence the stream strongly, so that the stream has a trapezoidal flow rate distribution which is often called a plug flow, not a parabolic flow rate distribution. Therefore, if the distance between the upper surface and lower surface in the separation bed is maintained uniform, the stream can be maintained uniform. However, if collection channels are provided on the separation bed, the flow resistances of the collection channels influence the stream in the separation bed. As a result, the scattering flow resistances in the collection channels may cause the destruction of the uniform stream in the separation bed, and thereby, the free flow electrophoresis apparatus may not separate the liquid sample.
(ii) Moreover, in the free flow electrophoresis, since the voltage is applied to the buffer solution incorporating the liquid sample from the whole flat electrodes, much oxygen gas and hydrogen gas are generated at the surfaces of the electrodes through electrolysis of water. If the generated oxygen gas and hydrogen gas spread to the inner side of the separation bed, they influence the uniform stream of the buffer solution in the separation bed, resulting in the deterioration of the precise separation of the components of the liquid sample.

Thus, it is desired that the collection channels are formed so as not to influence the uniform stream or repress the influence for the uniform stream, and thereby, carry out the precise separation in the components of the liquid sample.

It is also desired that the precise separation in the components is carried out by preventing or repressing the fluctuation of the uniform stream if the oxygen gas and hydrogen gas are generated at the electrodes.

It is an object of the present invention to seek an improvement in the precision of separation of the components in a liquid sample in free flow electrophoresis apparatus as aforesaid.

According to this invention, there is provided a free flow electrophoresis apparatus comprising a separation bed for separating components of a liquid sample, a pair of electrodes in the outer side of the separation bed for applying a voltage to the liquid sample orthogonal to the stream of a buffer solution incorporating the liquid sample and a division flow path with collection channels for the extraction of the components of the liquid sample, the collection channels having substantially the same cross sectional area and substantially the same length.

The invention rests on the concept that it is desired to make uniform the pressure losses of the collection channels in between their inlets and outlets for removing the influence of the collection channels for the uniform stream of the buffer solution incorporating the liquid sample.

For example, if the central collection channels have larger lengths and both side collection channels have smaller lengths, the pressure losses become larger in both side collection channels. Therefore, the buffer solution flows toward the center of the separation bed.

To make uniform the pressure losses, in this invention the collection channels have substantially the same cross sectional area and substantially the same length. As a result, the uniform stream of the buffer solution incorporating the liquid sample is maintained, and thus, each separated component of the liquid sample can be extracted effectively. According to this invention, the above problem (I) is solved.

In a preferred embodiment of the present invention, the free flow electrophoresis apparatus further comprises partitions in the inner sides of the electrodes in the separation bed so as to cover the electrodes. In this case, the partitions are attached on the upper wall of the free flow electrophoresis apparatus, and minute spaces are formed in between the lower edges of the partitions and the lower wall thereof.

In the above preferred embodiment, since the partitions are provided in the inner sides of the electrodes so as to cover the electrodes, the oxygen gas and hydrogen gas generated at the large flat surfaces of the electrodes are prevented from diffusing to the inner side of the separation bed.

Since the generated gas is likely to diffuse upward, it is desired that the partitions are attached to the upper surface of the separation bed. Thereby, the diffusion of the generated oxygen gas and hydrogen gas are effectively prevented, and thus, the precise separation of the components of the liquid sample can be carried out. According to the preferred embodiment, the above problem (ii) is solved.

In another preferred embodiment, it is desired that ditches are formed in the upper wall of the free flow electrophoresis apparatus so as to match the edge portions of the separation bed, and the electrodes are provided in the ditches.

In the above preferred embodiment, since the ditches are provided in the upper wall of the apparatus in opposition to the edge portions of the separation bed and the electrodes are provided in the ditches, the generated oxygen gas and hydrogen gas at the electrode remain near the electrodes, and are exhausted outside through some of the collection channels continuing to the ditches.

Since the buffer solution flows faster in the ditches than in the separation bed near the injection inlet of the liquid sample, it is likely to flow toward the ditches. However, at a given down distance from the injection inlet, the buffer solution flows uniformly in the ditches and the separation bed in proportion to their cross sectional areas. Therefore, at the down stream, the components of the liquid sample can be precisely separated. According to this preferred embodiment, the above problem (ii) is solved as well as the above preferred embodiment.

The electrodes may be provided in the edge portions of the separation bed in opposition to the ditches.

For better understanding of the present invention, reference is made to the attached drawings, by way of example only, wherein
Fig. 1 is a schematic view showing a first embodiment of the free flow electrophoresis apparatus of the present invention,
Fig. 2A is a schematic view showing a second embodiment of the free flow electrophoresis apparatus of the present invention,
Fig. 2B is a cross sectional view, taken on line "A-A" of Fig. 2A,
Fig. 3A is a schematic view showing a third embodiment of the free flow electrophoresis apparatus of the present invention, and
Fig. 3B is a cross sectional view, taken on line "A-A" of Fig. 3A.

This invention will be described in detail, with reference to figures.

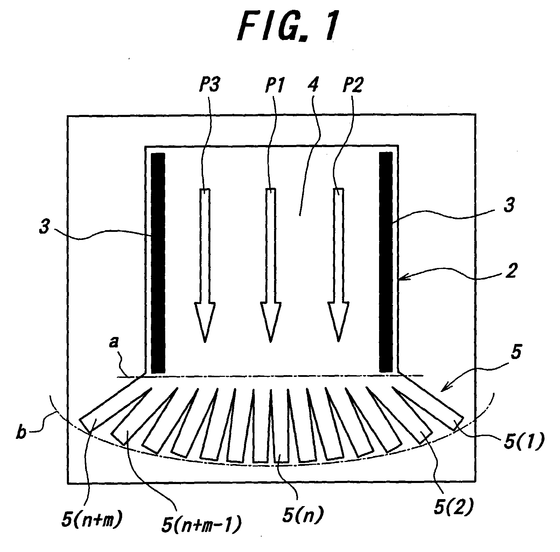

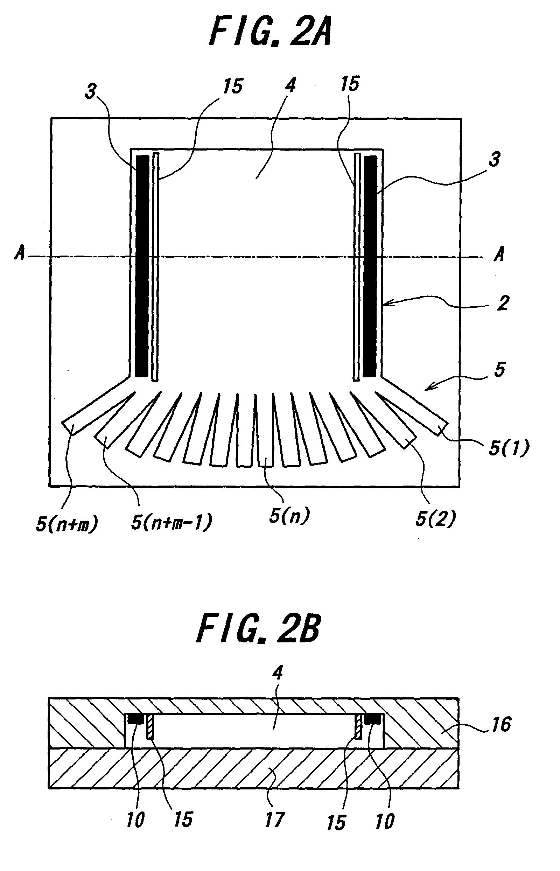

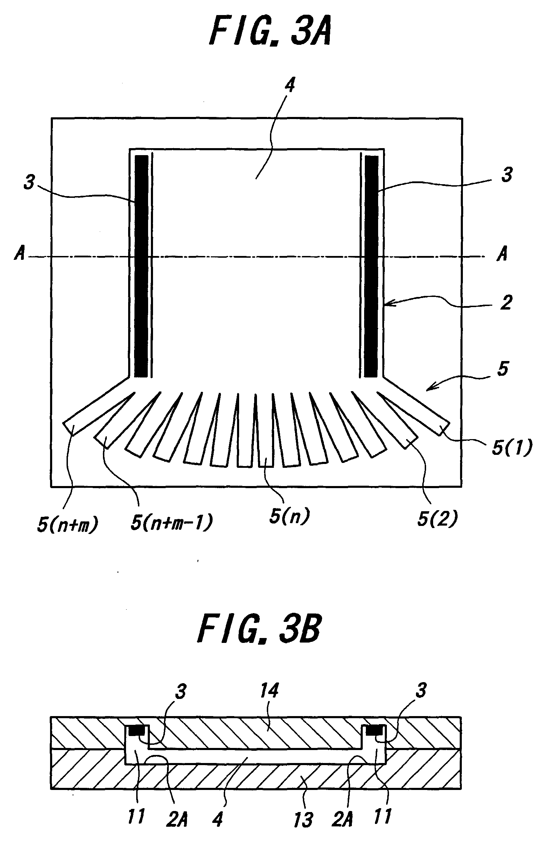

Fig. 1 is a schematic view showing a first embodiment of the free flow electrophoresis apparatus of the present invention. Fig. 2A is a schematic view showing a second embodiment of the free flow electrophoresis apparatus of the present invention, and Fig. 2B is a cross sectional view, taken on line "A-A" of Fig. 2A. Fig. 3A is a schematic view showing a third embodiment of the free flow electrophoresis apparatus of the present invention, and Fig. 3B is a cross sectional view, taken on line "A-A" of Fig. 3A.

In each embodiment as described below, a voltage is applied to a buffer solution and a liquid sample incorporated in the buffer solution in a free flow electrophoresis apparatus according to the present invention orthogonal to the down stream thereof.

Moreover, like numerals are given to similar parts in these figures.

A free flow electrophoresis apparatus in Fig. 1 is composed of two glass substrates, one glass substrate having an etched space 2 and an etched division flow path 5. In this case, the other glass substrate is attached to the glass substrate so as to cover the space 2 and the division flow path 5. Herein, the space 2 and the division flow path 5 have a depth of not more than 1 mm.

In the space 2, electrodes 3 and a separation bed 4 are provided. The electrodes 3 are provided alongside the inner surfaces of the space 2 in the outer side of the separation bed 4. Arrows P1, P2 and P3 designate the down stream of a buffer solution and a liquid sample incorporated in the buffer solution. Therefore, a given voltage is applied to the sample and the buffer solution orthogonal to the stream from the electrodes 3.

The division flow path 5 continues to the separation bed 4, and has many outward spread collection channels 5(1), 5(2), ···, 5(n), ···, 5(n+m-1), 5(n+m) for extraction of the components of the liquid sample. The outward spread collection channels enable the free flow electrophoresis apparatus to be joined to an external apparatus easily. The collection channels have the same cross sectional area and the same length according to the present invention.

That is, the precise separation of the liquid sample using the free flow electrophoresis requires the uniform stream of the buffer solution incorporating the liquid sample in the separation bed 4. Since the separation bed 4 has a short distance in between its upper and lower surfaces (for example, not more than 1 mm, as mentioned above), the stream is strongly influenced by the surfaces. Therefore, the stream has a trapezoidal flow rate distribution which is often called a plug flow, not a parabolic flow rate distribution. Without a division flow path, the constant distance in between the upper and lower surfaces can maintain the uniform stream, but with a different division flow path from the one of the present invention, the flow resistance of each collection channel in the different division flow path influences the uniform stream. That is, the scattering flow resistances in the collection channels may cause the destruction of the uniform stream in the separation bed 4, and thereby, the free flow electrophoresis apparatus may not separate the liquid sample.

In view of the above fact, the collection channels are required to have the same flow resistance, and thus, each collection channel is required to have the same pressure loss between its inlet and outlet. If the central collection channels including the collection channel 5(n) have their smaller lengths and the both side collection channels, for example, 5(1), 5(2), ···, 5(n+m), 5(n+m-1) have their larger lengths, their pressure losses become larger toward both sides from the center of the collection channels. Therefore, the stream of the buffer solution incorporating the liquid sample is likely to concentrate on the central collection channels, resulting in the deterioration of the separation in the liquid sample.

To iron out the problem, it is required to give all the collection channels the same cross sectional area and the same length to give them the same uniform pressure loss. Therefore, the collection channels 5(1), 5(2), ···, 5(n), ···, 5(n+m-1), 5(n+m) have the same cross sectional area and the same length, and thereby, have the same pressure loss between the inlets and outlets thereof, which are designated by dash lines "a" and "b".

As a result, the buffer solution flows uniformly in the separation bed 4, and thereby, the liquid sample can be separated effectively. That is, the free flow electrophoresis apparatus can separate the liquid solution precisely.

Next, the steps in the use of the free flow electrophoresis apparatus will be described.

First of all, the liquid sample is injected from the central portion of the top wall of the electrophoresis apparatus with flowing the buffer solution in the arrows P1, P2 and P3 direction. Since the separation bed 4 has a depth of not more than 1 mm, the buffer solution can flow in laminar flow and thus, the injected liquid sample is almost never mixed to the buffer solution except diffusion of two solutions. Therefore, without the application of the voltage from the electrodes 3, the liquid sample is not separated in its components and is exhausted from the collection channel 5(n) alongside the arrow P1.

On the other hand, with application of the voltage from the electrodes 3, the liquid sample is separated in the orthogonal direction to the stream of the buffer solution depicted by the arrow P1, and the separated components in the liquid sample flow are spread toward the outlet of the free flow electrophoresis apparatus. Since the collection channels in the division flow path 5 have the same pressure loss due to their same cross sectional area and length, each of the separated components is introduced uniformly into the respective collection channel and is exhausted therefrom. Therefore, the appropriate selection from the collection channels enables the desired component of the liquid sample to be taken out easily with separation.

Variation and modification may be made to the free flow electrophoresis apparatus in this embodiment without departing from the scope of the present invention.

For example, although each of the collection channels is formed in straight, it may be formed in curve or in bend.

A free flow electrophoresis apparatus in Fig. 2 has the same structure except that partitions 15 are provided in the inner sides of the electrodes 3 so as to cover the electrodes 3 which are formed alongside the inner surfaces of the space 2, and the lower edges of the partitions 15 are separated from a lower glass substrate 17 constituting the electrophoresis apparatus by minute spaces so as to be electrically conducted each other and thereby, apply a voltage to the buffer solution and the liquid sample incorporated in the buffer solution.

In this embodiment, as mentioned above, a given voltage is applied to the sample and the buffer solution orthogonal to the stream thereof from the electrodes 3 and then, the sample is separated in its components.

Since the free flow electrophoresis apparatus in this embodiment has the similar structure and the similar operation to the ones in the first embodiment, it exhibits the similar effects.

The substantial parts of the free flow electrophoresis apparatus in this embodiment will be described.

The free flow electrophoresis apparatus is composed of two glass substrates, the upper glass substrate 16 having the etched separation bed 4, the lower glass substrate 17 being attached to the upper glass substrate 16 so as to cover the etched separation bed 4.

The partitions 15 are provided in the inner sides of the electrodes 3 so as to cover the electrodes 3. The partitions 15 are attached to the upper glass substrate 16, and have minute spaces in between their lower edges and the lower glass substrate 17.

When a voltage is applied entirely to the liquid sample and the buffer solution in the separation bed 4 from the electrodes 3, much oxygen gas and hydrogen gas are generated through the electrolysis of the water near the surfaces of the electrodes 3, and are spread toward the inner side of the separation bed 4. The spread oxygen gas and hydrogen gas influence the uniform stream of the buffer solution, and disturb the precise separation of the liquid sample. In view of the prevention of the influence of the oxygen gas and hydrogen gas for the uniform stream, the second embodiment is invented.

That is, since the free flow electrophoresis apparatus has the partitions 15 in the inner sides of the electrodes 3 so as to cover the electrodes 3, the generated oxygen gas and hydrogen gas are prevented from diffusing to the inner side of the separation bed 4. Moreover, as mentioned above, since the partitions 15 are attached to the upper glass substrate 16 and thereby, the minute spaces are provided for the lower glass substrate 17, the electrodes 3 are electrically conducted each other.

The minute spaces are preferably set to dimensions of 1-500 µm, respectively. If the minute space has a smaller dimension than 1 µm, the resistance of the buffer solution in the separation bed 4 is substantially increased, so that the separation effectiveness of the liquid sample is degraded through the reduced applied voltage. If the minute space has a larger dimension than 500 µm, the generated oxygen gas and hydrogen gas may be diffused into the inner side of the separation bed 4 to some degree.

In this embodiment, although the partitions 15 are attached to the upper glass substrate 16, they may be attached to the lower glass substrate 17. For preventing the oxygen gas and hydrogen gas from diffusing into the inner side of the separation bed 4 effectively, the partitions 15 are preferably attached to the upper glass substrate 16.

In this embodiment, the generated oxygen gas and hydrogen gas remain near the electrodes 3, and do not diffuse to the inner side of the separation bed 4, and then, are carried by the buffer solution which flows alongside the electrodes 3 to be exhausted outside through the collection channels. Therefore, the generated oxygen gas and hydrogen gas do not influence the stream of the buffer solution in the separation bed 4, leading to the precise separation of the liquid sample.

The steps in the use of the free flow electrophoresis apparatus are similar to the ones in the above first embodiment.

Variation and modification may be made to the free flow electrophoresis apparatus in this embodiment without departing from the scope of the present invention.

For example, in this embodiment, the minute spaces between the lower edges of the partitions 15 and the lower glass substrate 17 are fabricated by shortening the widths of the partitions than the depth of the separation bed 4, but may be fabricated, for the partitions and separation bed having the same dimension in width and depth by forming etched ditches in the lower glass substrate 17. In this case, the separation bed 4 and the partitions 15 are fabricated at the same time.

A free flow electrophoresis apparatus in Fig. 3 has the same structure except that ditches 11 are provided in an upper glass substrate 14 and the electrodes 3 are provided in the ditches 11.

The above apparatus structure is fabricated so as to prevent the oxygen gas and hydrogen gas generated at the electrodes 3 from diffusing into the inner side of the separation bed 4 as in the second embodiment.

The substantial parts of the free flow electrophoresis apparatus in this embodiment will be described below.

In this embodiment, the space 2 to constitute the separation bed 4 is formed in a given depth (for example, 1 mm or below) by etching the lower glass substrate 13, and the ditches 11 are formed by etching the upper glass substrate 14. The upper glass substrate 14 is attached to the lower glass substrate 13 so that the ditches 11 can match the edge portions 2A of the space 2 and the substrate 14 can cover the space 2.

The generated oxygen gas and hydrogen gas at the electrodes 3 remain at the ditches 11, and then, are carried by the buffer solution to be exhausted from some of the collection channels continuing to the ditches 11. The buffer solution flows faster in the ditches 11 than in the center 4A of the separation bed 4, and thus, flows toward the electrodes 3 near the injection inlet. At a short down distance from the injection inlet, the buffer solution flows uniformly in the ditches 11 and the separation bed 4 in proportion to their cross sectional areas.

Therefore, in the down area of the separation bed 4, the separation of the liquid sample incorporated in the buffer solution can be carried out precisely.

The electrodes 3 may be provided on the edge portions 2A of the space 2 to constitute the separation bed 4, but preferably are provided in the ditches 11 to prevent the diffusion of the generated oxygen gas and hydrogen gas effectively.

The steps in the use of the free flow electrophoresis apparatus are similar to the ones in the above first embodiment. Moreover, since the free flow electrophoresis apparatus in this embodiment has the similar structure and the similar operation to the ones in the first embodiment, it can exhibit the similar effects.

Although the present invention was described in detail with reference to the above examples, this invention is not limited to the above disclosure and every kind of variation and modification may be made without departing from the scope of the present invention as defined in the claims.

## Claims

1. A free flow electrophoresis apparatus comprising a separation bed for separating components of a liquid sample, a pair of electrodes in the outer side of the separation bed for applying a voltage to the liquid sample orthogonal to the stream of a buffer solution incorporating the liquid sample and a division flow path with collection channels for extracting the components of the liquid sample, the collection channels having substantially the same cross sectional area and substantially the same length.

2. A free flow electrophoresis apparatus as defined in claim 1, further comprising partitions in the inner sides of the electrodes in the separation bed so as to cover the electrodes.

3. A free flow electrophoresis apparatus defined in claim 2, wherein the partitions are attached on the upper wall of the free flow electrophoresis apparatus, and minute spaces are formed in between the lower edges of the partitions and the lower wall thereof.

4. A free flow electrophoresis apparatus defined in claim 1, wherein ditches are formed in the upper wall of the free flow electrophoresis apparatus so as to match the edge portions of the separation bed, and the electrodes are provided in the ditches.

5. A free flow electrophoresis apparatus defined in claim 1, wherein ditches are formed in the upper wall of the free flow electrophoresis apparatus so as to match the edge portions of the separation bed, and the electrodes are provided in the edge portions of the separation bed opposite the ditches.
